Europäisches Patentamt

European Patent Office

Office européen des brevets

(11) Publication number: **0 473 806 A1**

# EUROPEAN PATENT APPLICATION

(21) Application number: **90116853.4**

(22) Date of filing: **03.09.90**

(51) Int. Cl.5: **G06F 13/24**, G06F 11/00

(43) Date of publication of application:
**11.03.92 Bulletin 92/11**

(84) Designated Contracting States:
**DE FR GB**

(71) Applicant: **International Business Machines Corporation**
**Old Orchard Road**
**Armonk, N.Y. 10504(US)**

(72) Inventor: **Gervais, Gilles, Dipl.-Ing.**
**Mörikestrasse 14**
**W-7039 Weil im Schönbuch(DE)**

(74) Representative: **Jost, Ottokarl, Dipl.-Ing.**
**IBM Deutschland GmbH Patentwesen und Urheberrecht Schönaicher Strasse 220**
**W-7030 Böblingen(DE)**

(54) Apparatus and method for error detection and fault isolation.

(57) Error detection and fault isolation mechanisms generally require separate capture latches (20, 22) to capture every occurrence of an error (for example from a parity checker or timeout counter) and an associated mask latch (30, 32) to temporarily or permanently block further detection of the same error. In the claimed invention, the mask latch is replaced by a single error control mechanism (160) which is able to set and reset the error capture latches (210). The detected error is held in the capture latch (210), so preventing further captures of errors, until a signal from the single error control mechanism (160) resets the latch (210).

FIG. 2

Field of the Invention

Hardware error reporting logic in a computer system usually requires that a mask register be associated with each error capture latch so that the reporting of specific errors may be disabled if necessary. The invention described herein eliminates the need for an error mask register whilst maintaining all the necessary functions of this register.

Background of the Invention

In a distributed processor control unit, a main processor supervises separate controls or controllers provided for each of the different sectors of the machines e.g. input/output controllers. In such an environment, error detection and subsequent problem determination is complicated. The system requires means to identify any errors that occur and then interrupt the working of the main processor whilst the error is evaluated and, if necessary, corrected. If more than one error occurs in any particular time period or if, during the evaluation of one error, a second error occurs, then means have to be provided to ensure that the occurrence of this second error does not influence the evaluation of the first error. In addition, it is desirable that a record is kept of the occurrence of the second error such that it can be evaluated after the main processor has completed its work on the first error. Some errors are of such significance that they cannot be corrected by the processor and means have to be provided for isolating these faults such that their repeated occurrence does not continually interrupt the functioning of the main processor.

In current systems where such error detection and fault isolation is implemented, each logic chip has an error reporting register and an associated error mask register, both of which can be read and/or written by the error handling mechanism. A mask register is used both to temporarily disable specific errors to allow other errors to be reported or to permanently disable a specific interrupt in the case of defective error detection circuitry. Examples of such systems are shown in the Research Disclosure No 25236, "Priority status recording with mask capability", published on 10 April 1985, "Primary error detection system for I/O apparatus", IBM Technical Disclosure Bulletin, vol 30, no 1, June 1987, pp 379-380 and in US-A-4 932 028 (KATIRICIOGLU et al).

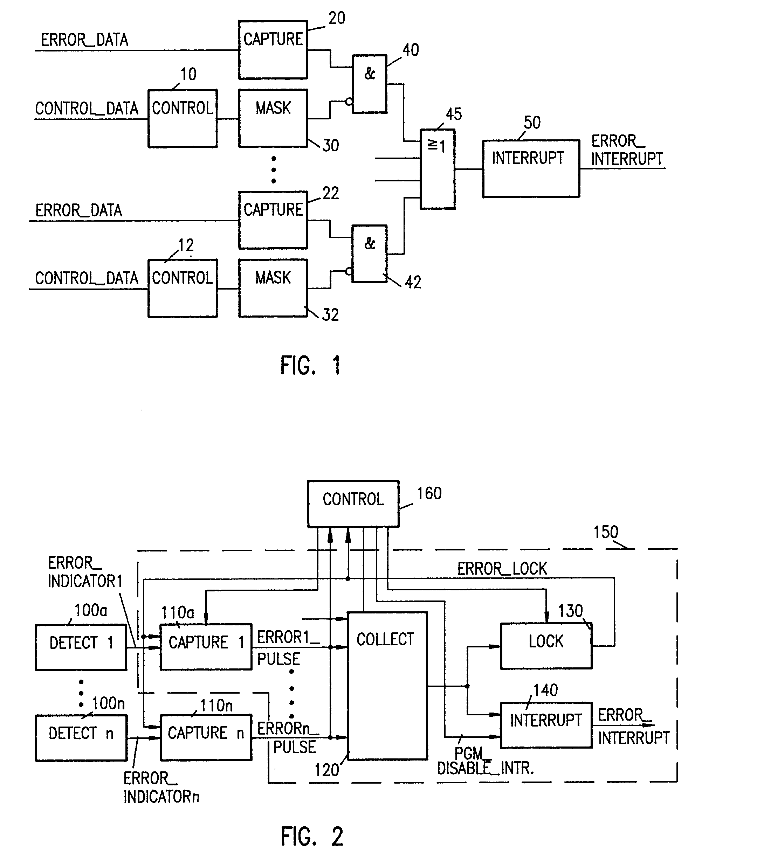

Fig. 1 shows a simplified view of a current approach for error logic using mask registers. For every error capture latch 20, 22, there is an associated mask latch 30, 32 which can be used to block the error from generating an interrupt in the interrupt latch 50. To set and reset each mask latch 30, 32, control logic 10, 12 is needed to decode control commands from the error handling mechanism. In application where there are numerous error logging elements (error capture latches), the hardware overhead for implementing the mask logic is certainly substantial. The logic gates required occupy a lot of space on the chip and are comparatively slow and inflexible.

Summary of the invention

The invention consists of replacing all the existing mask latches and corresponding mask control logic circuit by a single error control mechanism. This error control mechanism receives a pulse from each capture latch whenever an error message is detected. It passes the first error message it receives to the interrupter and blocks or masks the passage of further error messages. These further error messages, however, are still held in their respective capture latches so that they can be later passed to the main processor after it has finished its evaluation of the first error occurrence. Means are also provided for permanently disabling any error input if this is required.

Brief Description of the Drawings

Fig. 1    shows a simplified view of current error logging approach using mask registers.

Fig. 2    shows a functional block diagram of self masking error capture and lock mechanism incorporating the error control mechanism.

Fig. 3    shows the error handling mechanism in greater detail.

Fig. 4    shows a timing diagram for basic error capture and reporting.

Fig. 5    shows a timing diagram for multiple error capture and reporting.

Fig. 6    shows a timing diagram for multiple error capture, lock and reporting.

Fig. 7    shows a timing diagram for the basic error masking sequence.

Detailed Description of the Invention

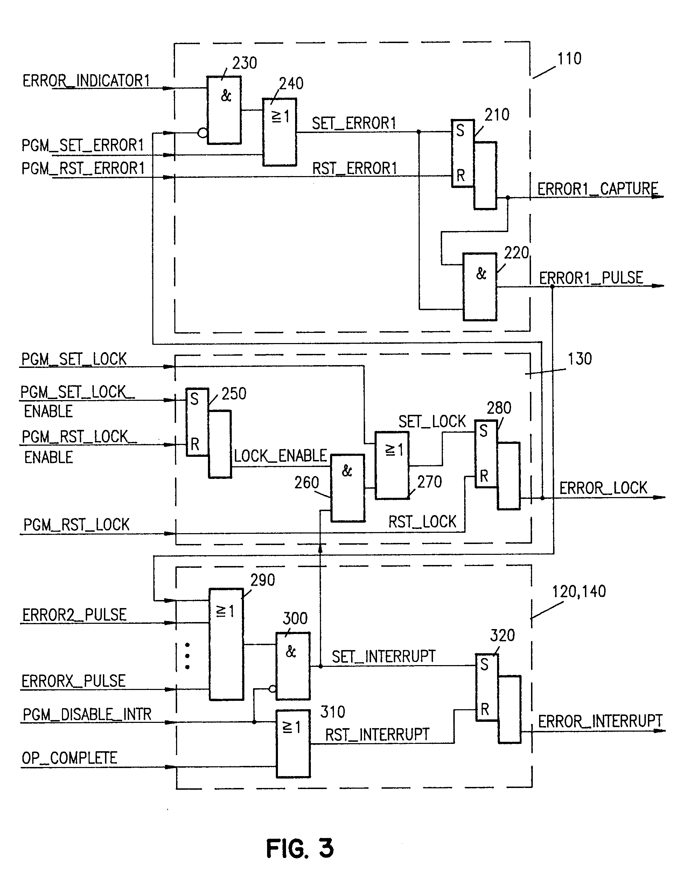

A block diagram of the basic elements involved in the error detection and reporting mechanism is shown in Fig. 2. It shows a series of error detection elements 100a-n connected to error capture element 110a-n. These are in turn connected to the error collector 120. The error collector 120 has two outputs, one of which is to the interrupt generator 140 which sends a signal to the microprocessor (not shown) to interrupt its current processing, and the other of which is to the lock generator 130 which in turn is connected to all the error capture elements 110a-n. The error control mechanism 160 is connected to each of these units and produces signals to control the sequence in which errors are handled, to block the collection of further errors and to disable the generation of interrupt signals. It further includes means to monitor which error detection elements have detected an error and which error reports still require attention. The area enclosed by the dotted lines represents the error capture and lock mechanism 150 and is shown in more detail in Fig. 3.

The general operation of the error capture and lock mechanism 150 will now be described in connection with Figs. 2 and 3. Errors are detected in the error detection elements 100a-n and must be active for at least one clock cycle. These error detection elements may be formed of any standard error detection logic elements such as parity checkers, timeout counters etc. For the sake of simplicity, the operation of the invention will only be described by assuming that an error has been detected by error detection 100a. The principles of the procedure can, of course, be generally applied to an error detected in any of the error detectors 100a-n.

On detection of an error, the error detection element 100a passes a signal ERROR_INDICATOR1 to the appropriate error capture element 110a. There is one capture element 110 for each error detection element 100. The first active transition of the error indicator signal will set the capture latch 210 in the error capture element 110. Setting the capture latch 210 generates a signal ERROR1_CAPTURE which is passed to the AND gate 220 and can also be sent to the error control mechanism 160. Once the capture latch is set, any subsequent changes in the state of the error detector 100a will not affect the state of the set capture latch 210. The latch serves three purposes. Firstly it acts as an error logging register. After it has been set, the capture latch 210 remains set until it is reset by a signal PGM_RST_ERROR1 generated by the error control mechanism 160. Thus a group of capture latches 210 will act as an error register where the current error status can be read or written by the error handling mechanism 160 using signals ERROR1_CAPTURE to indicate the status of the latch 210, PGM_SET_ERROR1 to set the latch 210 or PGM_RST_ERROR1 to reset the latch 210. Secondly, the latch 210 acts as an error pulse generator. After the input to the latch has become active, a pulse ERROR1_PULSE is generated via the AND gate 220 that is used to trigger both the interrupt generator 140 and and the lock generator 130. Finally the capture latch 210 acts also as a mask register since further generation of ERROR1_PULSE is inhibited when the output of the capture latch 210 is active. Hence subsequent changes in the state of the error detector 100 will not trigger the interrupt and lock stages. Further errors are therefore essentially 'masked'.

As already described the signal (ERROR1_CAPTURE) from the capture latch 210 is passed to AND gate 220 where it generates a pulse, ERROR1_PULSE, which is in turn passed directly to the lock generator 130 and the error interruptor 140. The pulse is used in the error interruptor 140 to set the interrupt latch 320 as long as no signal PGM_DISABLE_INTR is being sent from the error control mechanism 160 to disable the error interruptor. Setting the interrupt latch 320 sends a signal ERROR_INTERRUPT to the next level in error reporting hierarchy. This level could, for example, be directly connected to the microprocessor to tell it to stop its current operation and deal appropriately with the detected error. The next level acknowledges that it has detected the interrupt by sending an OP_COMPLETE signal which is used to rearm the interrupt generator 140 by resetting the interrupt latch 320.

The lock generator 130 can be enabled or disabled by signals from the error control mechanism 160. When disabled (PGM_RST_LOCK_ENABLE high), all errors can be captured at any time. However, when the lock generator 130 is enabled (PGM_SET_LOCK_ENABLE high) then the detection of the first error produces a signal ERROR_LOCK from the latch 280 which is passed to a negated input of AND gate 230 and hence blocks the capture of all subsequent errors. The ERROR_LOCK signal can also be returned to the error control mechanism 160 to indicate that the capture of further errors has been masked. Typically once all the capture latches have been read (for example by detection of the ERRORn_CAPTURE signals in the error control mechanism 160), the error control mechanism 160 unlocks the error reporting logic by resetting the lock latch 280 using signal PGM_RST_LOCK.

The error control mechanism 160 can permanently mask errors by individually disabling the error capture elements using the following procedure. Firstly all interrupts are disabled by blocking the setting of interrupt latch 320 using the PGM_DISABLE_INTR signal through OR gate 310. A signal PGM_SET_ERROR is then sent through OR gate 240 to each capture latch 210 which is to be masked. This signal sets the capture latch 210 so that future changes in the ERROR_INDICATOR1 signal cannot generate an ERROR1_PULSE signal. Finally the error interruptor is re-enabled by making the PGM_DISABLE_INTR signal inactive to remove the forced reset of the interrupt latch 320.

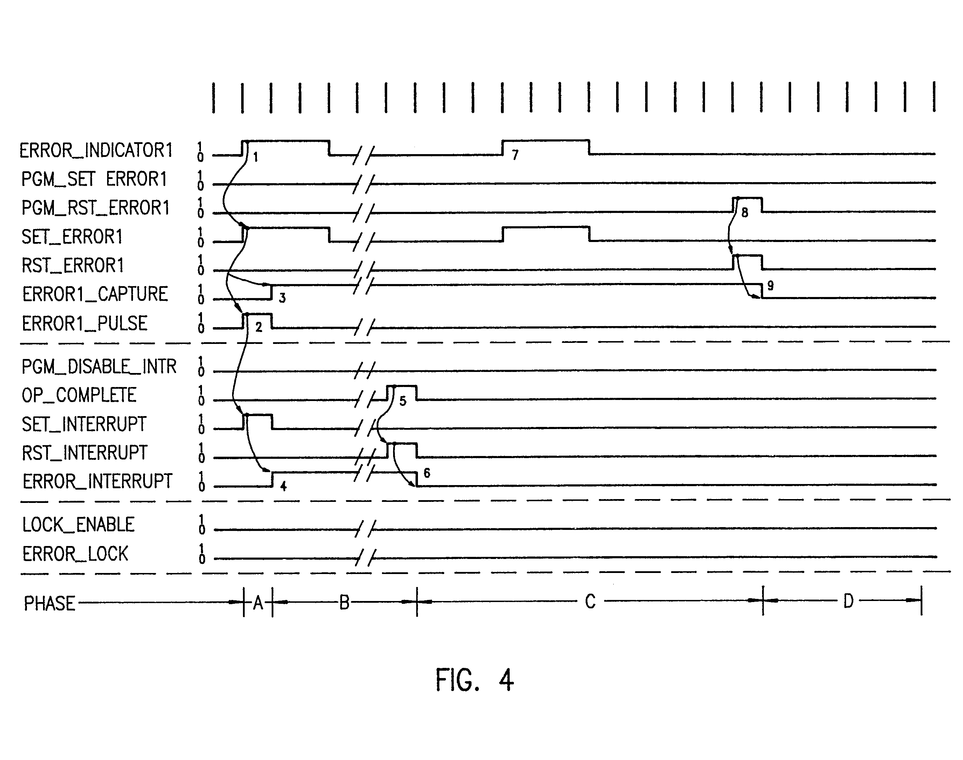

The invention can be better understood by considering the timing diagrams associated with the various basic operational sequences. The timing diagram shown in Fig. 4 shows the basic error capture and reporting sequence for the case where only one error is detected in the hardware. The error lock mechanism is disabled, i.e. LOCK_ENABLE signal from latch 250 is inactive., in this example. The sequence of events is as follows

Phase A: In this phase an error detector 100a (1) creates an ERROR1_PULSE signal (2) and sets a capture latch 210 (3). This error pulse is used to set the interrupt latch 320 (4).

Phase B: Once the interrupt signal is made active, a feedback signal is used to indicate that the interrupt has been logged elsewhere in the system (for example in the microprocessor). This feedback signal is denoted as OP_COMPLETE in the timing diagram. It is used (5) to reset the interrupt latch 320.

Phase C: After some time, the error control mechanism 160 can sense the capture latches 210 to determine the source of the interrupt. The capture latch 210 is then reset under the control of the error control mechanism 160 (8 and 9) so that subsequent error indicators can create an interrupt. Note that during this time the second error detected by the error indicator (7) did not create an interrupt since the active capture latch 210 was effectively masking it.

Phase D: Once the capture latch has been reset (9) using the RST_ERROR1 signal, the error indicator is once again able to generate interrupts.

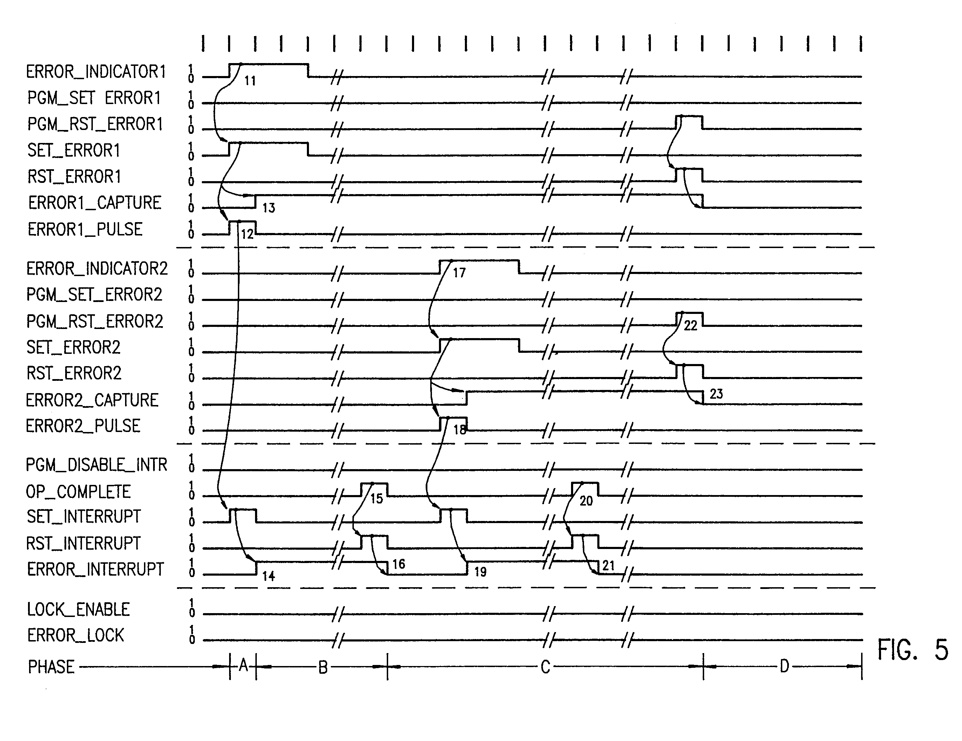

The timing diagram shown in Fig. 5 demonstrates the basic error capture and reporting sequence for the case where multiple errors are detected in the hardware. The error lock mechanism is again disabled (LOCK_ENABLE inactive) in this example. The sequence is basically the same as that described above for single error capture and reporting but that two errors are detected (11 and 17). The events are identical to those described above except that two interrupts are generated (14 and 19). Note that the first error indicator does not block the second indicator from being captured.

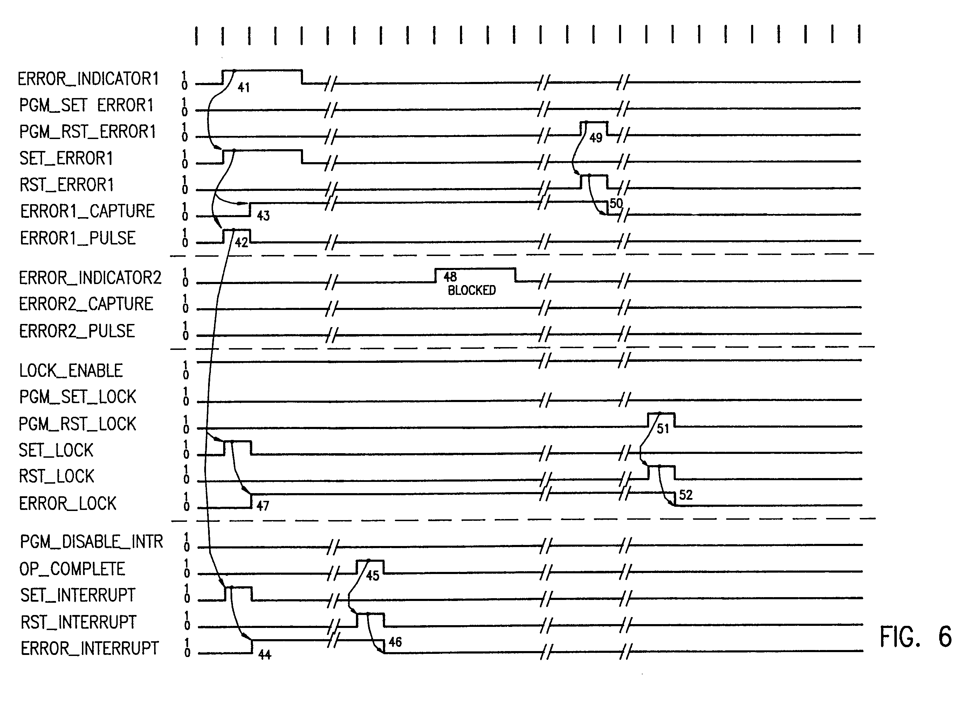

Finally the basic multiple error capture, lock and reporting is described with reference to Fig. 6. The error lock mechanism is enabled by setting LOCK_ENABLE active. The sequence is the same as that described in the above two examples. However, the generation of the error pulse (42) now sets the error lock (47). This error lock blocks subsequent error indicators (48) from being captured and generating an interrupt. For example ERROR_INDICATOR2 (48) is not captured and therefore does not create an interrupt. This feature is especially useful for hardware bring-up activity to determine which errors occur first. Once the error indicator(s) have been sensed and reset (49 and 50) by the error control mechanism 160, the error lock is reset (51 and 52) to re-enable the capture and reporting of errors.

**Claims**

1. Error detection and fault isolation mechanism for use in a data processing system comprising

   a plurality of error detection means (100, 110) for detecting the occurrence of errors;

   interrupt generating means (140) for generating an interrupt when the occurrence of an error is detected;

   a plurality of lock generating means (130) for blocking the detection of further error occurrences; and

   a single error control means (160).

2. Error detection and fault isolation mechanism according to claim 1 wherein said error detection means (100, 110) comprises

   an error detection element (100);

   means (210) to signal to the said single error control means (160) that an error has been detected; and

   means (220) to signal to the said interrupt generating means (140) that an error has been detected.

3. Error detection and fault isolation mechanism according to claim 2 wherein said error detection means further comprises

   means (210) to store an indication that an error has been detected.

4. Error detection and fault isolation mechanism according to claim 2 wherein said error detection means further comprises

   means (230) to temporarily block the detection of further errors.

5. Error detection and fault isolation mechanism according to claim 2 wherein said error detection means further comprises

means (240, 210) to isolate the detection of further errors; and

means (210) to re-enable the detection of further errors.

6. Error detection and fault isolation mechanism according to claim 2 wherein said error detection element (100) comprises

a parity checker.

7. Error detection and fault isolation mechanism according to claim 2 wherein said error detection element (100) comprises

a timeout counter.

8. Error detection and fault isolation mechanism according to claim 1 wherein the said interrupt generating means (140) comprises

means (290) to receive from each of the said plurality of error detection means (100, 110) a signal (ERROR_PULSE) to indicate that an error has been detected;

means (300, 320) to signal (ERROR_INTERRUPT) to a next error report hierarchy level that an error has been detected; and

means (310) to receive a signal (OP_COMPLETE) from the said next error report hierarchy level to indicate that it has finished processing the error report.

9. Error detection and fault isolation mechanism according to claim 8 wherein the said interrupt generating means (140) further comprises

means (310) to temporarily disable the generation of the said signal (ERROR_INTERRUPT) to the said next error report hierarchy level.

10. Error detection and fault isolation mechanism according to claim 1 wherein said lock generating means (130) comprises

means (280) to signal to the said error detection means (110) to temporarily block further capture of errors.

11. Error detection and fault isolation mechanism according to claim 1 wherein said error control means (160) comprises

means (310) to enable and disable the said interrupt generating means (140);

means (250) to enable and disable the said lock generating means (130);

means (210, 240) to enable and disable the said error capture means (110);

means to store reports of error capture; and

means to monitor which reports still require attention.

12. Method for detecting errors and isolating faults comprising

a first step of detecting the error;

a second step of storing the fact that an error has occurred in a first latch (210) to isolate the detection of further errors;

a third step of using the output signal (ERROR_PULSE) of the said first latch (210) to report that an error has occurred to a next error report hierarchy level and, optionally, to set lock generating means (130);

a fourth step of resetting the said first latch (210) to allow further errors to be detected.

13. Method for detecting errors and isolating faults according to claim 12 in which the third step comprises

using the said output signal (ERROR_PULSE) of the said first latch (210) to set a second latch (320).

using the output of the said second latch (320) to generate a signal (ERROR_INTERRUPT) which is sent to the said next error report hierarchy level;

resetting the said second latch (320) when a signal (OP_COMPLETE) is received indicating that the said next error report hierarchy level has finished processing the said error report.

14. Method for detecting errors and isolating faults according to claim 12 further comprising

setting the said first latch (210) so as to permanently disable the reporting of errors from this said first latch (210).

FIG. 1

FIG. 2

FIG. 3

7

FIG. 4

EP 0 473 806 A1

FIG. 5

FIG. 6

European
Patent Office

EUROPEAN SEARCH
REPORT

Application Number

EP 90 11 6853

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | IBM TECHNICAL DISCLOSURE BULLETIN, vol. 30, no. 1, June 1987, pages 370-380, New York, US; Anonymous: "Primary error detection system for I/O apparatus" * Whole document * | 1-11,13 | G 06 F 13/24 G 06 F 11/00 |
| | – – – | | |
| D,X | IDEM | 12 | |
| | – – – | | |
| A | EP-A-0 167 827   (IBM) * Abstract; figures 3,6; page 13, line 33 - page 15, line 27 * | 1-5,8, 10-12 | |
| | – – – | | |
| A | DE-A-1 474 062   (RADIO CORP. OF AMERICA) * Page 37, line 8 - page 38, line 5; figures 9a,9b * | 6 | |
| | – – – | | |
| A | US-A-4 802 089   (MOTOROLA) * Column 1, lines 26-52 * | 7 | |
| | – – – – – | | |

TECHNICAL FIELDS
SEARCHED (Int. Cl.5)

G 06 F

The present search report has been drawn up for all claims

| Place of search | Date of completion of search | Examiner |
|---|---|---|
| The Hague | 22 April 91 | KINGMA Y. |